Europäisches Patentamt

(19) European Patent Office

Office européen des brevets

(11) Numéro de publication: **0 176 388 B1**

(12) **FASCICULE DE BREVET EUROPEEN**

(45) Date de publication de fascicule du brevet:
27.12.91

(51) Int. Cl.⁵: **E06B 3/66, B65G 49/06, B65G 15/58**

(21) Numéro de dépôt: **85401634.2**

(22) Date de dépôt: **12.08.85**

(54) Installation pour la fabrication des vitrages multiples à joints en matières plastiques.

(30) Priorité: 22.08.84 FR 8413088
17.09.84 FR 8414185
17.09.84 FR 8414186

(43) Date de publication de la demande:
02.04.86 Bulletin 86/14

(45) Mention de la délivrance du brevet:
27.12.91 Bulletin 91/52

(84) Etats contractants désignés:
AT BE CH DE FR GB IT LI LU NL SE

(56) Documents cités:
DE-A- 2 843 861       DE-B- 2 816 437
FR-A- 2 006 248       FR-A- 2 173 777
FR-A- 2 208 040       FR-A- 2 294 140
FR-A- 2 294 313       FR-A- 2 417 463
FR-A- 2 418 778       US-A- 3 545 631

(73) Titulaire: SAINT-GOBAIN VITRAGE INTERNA-
TIONAL
18, avenue d'Alsace
F-92400 Courbevoie(FR)

(72) Inventeur: Lenhardt, Karl
Industriestrasse 2 - 4
W-7531 Neuhausen-Hamberg(DE)

(74) Mandataire: Leconte, Jean-Gérard et al
Saint-Gobain Recherche 39, Quai Lucien Lefranc
F-93304 Aubervilliers Cedex(FR)

## Description

La présente invention se rapporte à la fabrication de vitrages multiples à joints en matières plastiques et elle concerne plus particulièrement la pose d'un cordon en une matière plastique du type à base de caoutchouc butyl sur la périphérie d'une face d'une feuille de verre, ce cordon étant destiné à servir de joint et d'intercalaire entre cette première feuille sur laquelle il est déposé et une seconde feuille de verre appliquée ultérieurement, contre le cordon, sur son autre côté, parallèlement à la première feuille de verre.

Dans le cadre de la fabrication de vitrages multiples différentes techniques d'injection de matières plastiques du type polysulfure à la périphérie de double vitrages déjà constitués sont connues.

Mais d'une part les matières plastiques du type polysulfure ont un comportement tout à fait différent des matières à base de caoutchouc butyl, en particulier leur viscosité est beaucoup plus faible et d'autre part les conditions de pose et les contraintes à remplir sont totalement différentes.

En conséquence ces techniques ne peuvent pas être employées pour la pose d'un cordon, d'une matière du type à base de caoutchouc butyl sur la périphérie d'une face d'une feuille de verre unique.

Ce cordon doit posséder des caractéristiques physiques bien définies pour coller sur la feuille de verre d'une part et pour jouer son rôle d'intercalaire d'autre part. En particulier il doit posséder une consistance ou une viscosité bien précise définie dans le brevet français publié sous le numéro 2 294 313 comme devant être supérieure à 115° Mooney au bout de huit minutes et à 40°C. Il doit être continu pour former un joint étanche. Il doit également être parfaitement calibré puisque c'est sa hauteur qui détermine l'espace entre les deux feuilles consécutives et cette hauteur doit être constante en tous les points de sa longueur.

Il doit être en outre déposé sur la feuille de verre de façon à former avec elle au moment de son collage un angle compris entre 15 et 45° et de préférence entre 25 et 35°.

On arrive à réunir toutes ces exigences en formant le cordon à l'aide d'une boudineuse dont la buse forme avec la feuille de verre l'angle requis de 15 à 45°, cette boudineuse étant fixe et la feuille de verre se déplaçant sous elle pour lui présenter successivement chacun de ses côtés. Un tel procédé de pose et l'installation nécessaire pour le mettre en oeuvre sont décrits dans la publication de brevet français 2 294 313 déjà citée.

La feuille de verre est translatée horizontalement sous la buse de la boudineuse grâce à un convoyeur et elle est tournée pour présenter successivement chacun de ses côtés sous la buse grâce à un bras de rotation à axe perpendiculaire au plan du convoyeur enclavé entre les éléments dudit convoyeur comme décrit dans la publication de brevet français 2 211 413.

On peut ainsi manipuler sans problème des feuilles de verre ayant un périmètre de l'ordre de 5 m.

Grâce à cette installation antérieure, la feuille de verre défile toujours dans le même sens, sous une buse unique, si bien que l'angle de 15 à 45° que doit faire la buse avec le plan de la feuille de verre pour avoir un bon collage du cordon, peut être obtenu une fois pour toute, par blocage de la buse dans la position désirée et n'a donc aucun risque d'être altéré quand on passe de la pose du cordon suivant un côté de la feuille de verre, à sa pose suivant un autre côté. De la même façon, compte tenu qu'il n'y a qu'une buse, on peut atteindre une grande constance dans les dimensions du cordon fourni.

En outre, la boudineuse étant fixe, il n'y a aucun inconvénient à ce que les moyens de production du cordon, en particulier des éléments de la boudineuse ou liés au fonctionnement de la boudineuse tels un moteur, un embrayage frein, et... soient gros et pesants.

Par ailleurs, les feuilles de verre évoluant à plat sur un convoyeur, par exemple à rouleaux simples ou munis de bagues annulaires, peuvent avoir des mouvements précis, en particulier des accélérations et des freinages, cette précision étant due au fait que les feuilles de verre reposent pour toute leur surface sur les rouleaux ou leurs bagues et donc que leur inertie est contrebalancée par la grande surface de contact.

Cependant, si la dépose du cordon à partir d'une buse fixe sur une feuille de verre posée à plat et présentant successivement tous ses côtés à la buse, présente des avantages, elle présente aussi des inconvénients.

En effet, la manipulation et en particulier la rotation sur le convoyeur de feuilles de verre de tailles importantes, par exemple de périmètre de l'ordre de 15 m est trop encombrante et pratiquement impossible à réaliser.

D'autre part, dans une chaine de fabrication de vitrages multiples, certaines opérations se font nécessairement sur les feuilles de verre disposées verticalement, ainsi par exemple le pressage, le contrôle optique, etc, il en résulte que lorsque le cordon périphérique est déposé sur les feuilles de verre à plat, il faut pratiquer des manutentions pour passer de la position à plat à la position redressée verticalement pour effectuer le pressage, le contrôle optique, etc.

On connait d'ailleurs des installations liées à la production de vitrages isolants où la feuille de verre est traitée en position verticale. Ainsi DE-A-2 843 861 décrit un procédé automatique de collage des bords d'une feuille de verre. La colle est déposée sur la tranche au moyen d'une buse déplacée verticalement, parallèlement au plan de la feuille qui est elle posée verticalement sur un convoyeur qui la déplace devant la buse pour l'enduction des bords horizontaux. Toutefois, il doit être noté que ce type d'opération ne réclame pas une très grande précision quant à la quantité de colle déposée. Par ailleurs, le guidage de la buse est simplifié du fait que le dépôt s'effectue sur la tranche et non sur une face du vitrage comme dans le cas du cordon de caoutchouc butyl. De plus, la colle est disponible par exemple dans un fût sous une forme prête à l'emploi, selon une viscosité assez faible qui ne pose pas de problème d'alimentation de la buse. Enfin la buse peut être de construction relativement simple, corollairement relativement légère alors que dans le cas du cordon de caoutchouc butyl la buse doit être associée à tout un ensemble de préparation du cordon, notamment un ensemble régulateur de la pression.

Est également connu du brevet DE-A-2 816 437 un procédé de remplissage automatique des joints d'un vitrage isolant par un agent d'étanchéité qui est injecté en faisant appel à deux buses de remplissage. Ce document cerne le problème de l'injection du second joint périphérique d'étanchéité, c'est-à-dire du joint à base de polysulfure. Le problème que pose ce second joint est très simplifié dans la mesure où il s'agit de remplir un espace déjà limité par des parois (verre et cadre entretoise ou caoutchouc butyl). De plus, ce joint n'est pas apparent et on peut donc tolérer de petits défauts d'esthétique. Enfin, comme dans le cas du brevet DE-A-2 843 861, la matière est disponible dans le fût selon la consistance voulue pour son utilisation et peut de par sa faible viscosité être fournie à la base sans difficulté par des flexibles.

La présente invention vise à éviter les inconvénients de l'art antérieur, à savoir difficulté de tourner les feuilles de verre de grandes dimensions pour présenter successivement tous leurs côtés sous une buse d'extrusion, nécessité de manutentionner les feuilles de verre d'une position à plat à une position redressée à la verticale pour effectuer certaines opérations nécessairement ou classiquement en position redressée.

Pour cela l'invention propose une installation pour extruder et déposer à la périphérie d'une feuille de verre un cordon calibré extrudé à partir d'une matière plastique à base de caoutchouc butyl dont la viscosité est supérieure à 115° Mooney au bout de huit minutes et à 40° C, à l'aide d'un ensemble d'extrusion, comprenant un tableau vertical ou sensiblement vertical sur lequel est adossée la feuille de verre déplacée par un convoyeur la faisant défiler dans les deux sens devant l'ensemble d'extrusion, un réservoir fixe et une pompe pour extraire la matière plastique contenue dans le réservoir, une platine mobile le long de glissières verticales ou sensiblement verticales, portant un magasin à volume variable - constituant une réserve de matière plastique et régularisant la pression de la matière à sa sortie - une pompe et une tête d'extrusion, des conduites branchées entre la pompe et le magasin à volume variable, et des moyens pour faire pivoter la tête d'extrusion autour d'un axe perpendiculaire au plan du tableau afin de maintenir constant l'angle entre la tête d'extrusion et ledit plan.

L'installation selon l'invention comporte ainsi un premier ensemble fixe avec des moyens relativement puissants du type pompe, afin d'extraire la matière du réservoir et la conduire à un second ensemble, mobile verticalement, où la matière plastique à base de caoutchouc butyl est préparée en vue de son extrusion juste en amont de la buse d'extraction.

L'invention sera maintenant décrite plus en détail en référence aux figures jointes qui représentent :

- figure 1 : une vue schématique de profil de l'installation de dépose d'un cordon sur une feuille de verre selon l'invention,
- figure 2 : une vue schématique de face de l'installation selon la figure 1.
- figure 3 : une vue de dessus de l'installation selon les figures 1 ou 2.
- figure 4 : un schéma de principe illustrant le fonctionnement de cette installation associé à des diagrammes de vitesse.

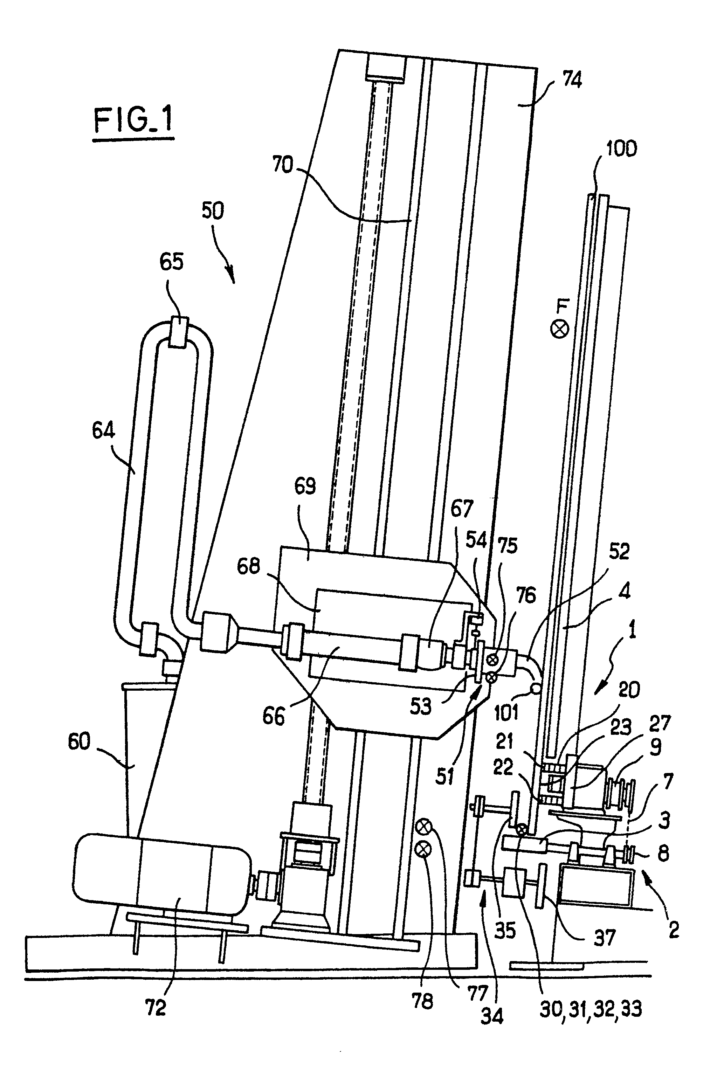

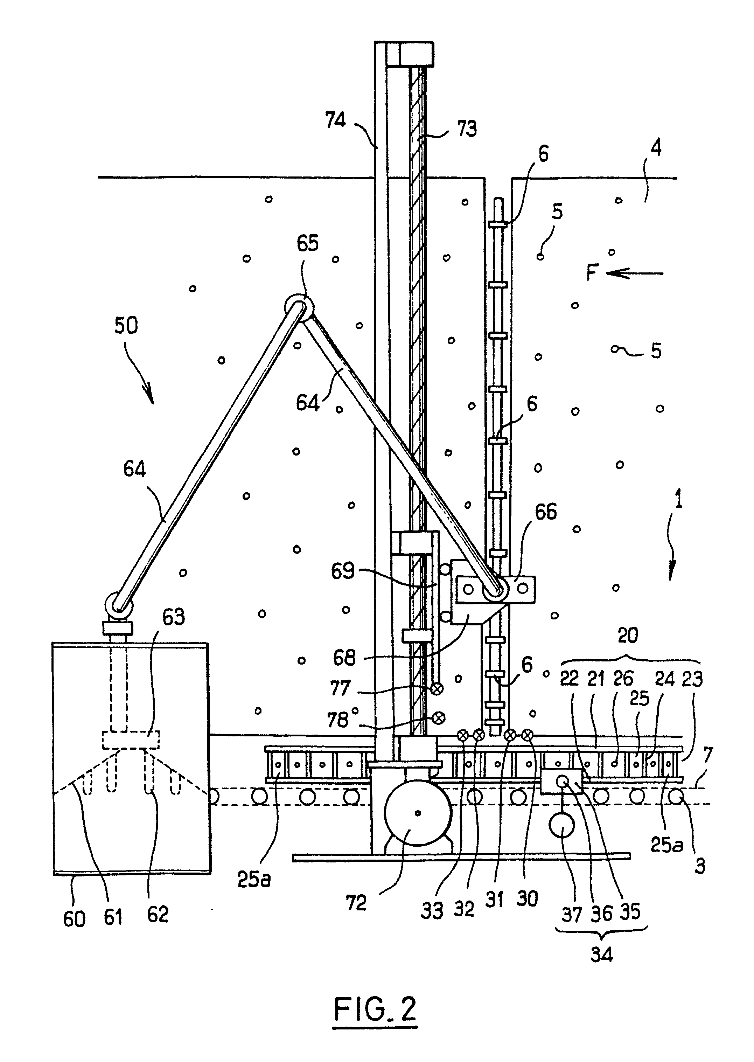

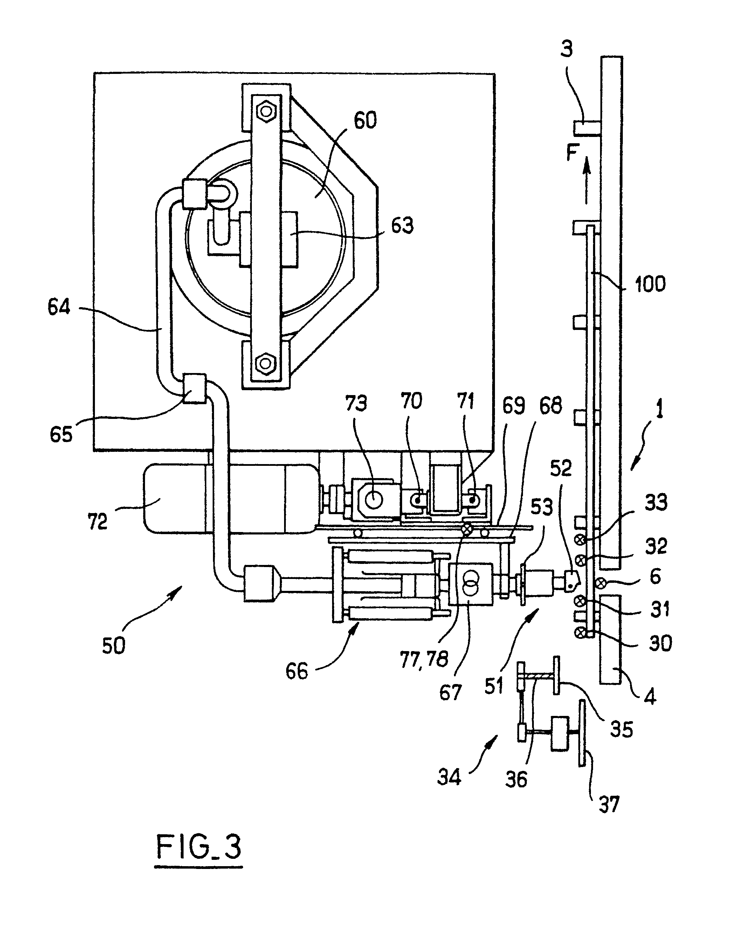

Sur les figures 1, 2 et 3, on représente un ensemble 1 de transport de feuilles de verre 100 ainsi qu'un ensemble 50 de préparation d'une matière plastique.

L'ensemble 1 permet de faire défiler les feuilles de verre 100 en position verticale ou sensiblement verticale en regard de l'ensemble 50 qui fournit le cordon 101 de matière plastique, de façon que ledit cordon 101 soit déposé sur la périphérie de la face de la feuille de verre 100 orientée vers l'ensemble 50 fournissant la matière plastique.

Cet ensemble 1 de transport comprend essentiellement un convoyeur 2 à rouleaux 3 à axes horizontaux ou sensiblement horizontaux, disposé à la base d'un tableau 4 vertical ou sensiblement vertical contre lequel les feuilles de verre 100 défilant sur le convoyeur 2 sont adossées. Ce tableau 4 est muni de galets non représentés ou de préférence d'orifices 5 de soufflage d'un gaz notamment de l'air, en vue d'éviter le frottement des feuilles de verre 100 sur le tableau 4 luimême, grâce au coussin de gaz ainsi créé entre le verre 100 et le tableau 4. Pour éviter d'incommoder les opérateurs en l'absence d'une feuille de verre 100, les orifices 5 à hauteur d'homme sont avantageusement inclinés vers le bas ou vers le haut. Ce tableau 4 est équipé, face à l'ensemble d'extrusion 50, d'au moins une rangée verticale de galets 6 débordant légèrement du plan du tableau 4 et destinés à servir de points durs d'appui des feuilles de verre 100 lors de l'extrusion. Avantageusement ces galets sont escamotables.

Le convoyeur 2 est avantageusement constitué d'une pluralité de sections juxtaposées, chacune étant apte à défiler à une vitesse différente de celle des autres sections ou au contraire, lorsque désiré, à la même vitesse. Un système classique de chaines 7 engrenant sur des pignons 8 disposés en extrémité des axes des rouleaux 3, d'embrayages 9, de moteurs non figurés, permet d'obtenir un défilement de toutes les sections aux vitesses désirées. Ces moteurs sont avantageusement des moteurs à courant continu pilotés par exemple par cartes de consignes par l'intermédiaire d'un variateur.

Seuls des éléments du système d'entrainement du convoyeur 2 à rouleaux 3 sont visibles sur la figure 1.

Avantageusement les rouleaux 3 sont en un matériau non adhérent du type téflon ou revêtus d'un tel matériau.

Dans la région faisant face à l'ensemble 50 de préparation de la matière plastique et d'extrusion d'un cordon 101, la partie basse du tableau 4 est avantageusement évidée permettant ainsi le logement d'un système de transport à dépression 20 garantissant la précision des mouvements des feuilles de verre 100.

En effet, pour des vitesses élevées de déplacement desdites feuilles de verre et des arrêts rapides, il existe un risque de glissement des feuilles de verre sur les rouleaux 3, les feuilles de verre ne reposant que par leur tranche sur lesdits rouleaux 3.

Ce système de transport 20 comprend essentiellement deux bandes 21 et 22 sans fin en matériau anti-glisse, du type caoutchouc, disposées en parallèle dans un même plan parallèle à celui du tableau 4, légèrement avancé par rapport à ce tableau 4 d'une distance qui correspond à l'épaisseur du coussin d'air formé entre les feuilles de verre 100 et ledit tableau 4, soit environ 1 mm. Ces bandes sans fin 21 et 22 sont entrainées dans le même sens et à la même vitesse qui est également celle du convoyeur 2 placé immédiatement en dessous, par un système moteur non représenté.

Ces bandes sans fin 21 et 22 sont disposées de part et d'autre d'un canal à dépression 23, que des barrettes transversales 24 divisent en un certain nombre de chambres à vide distinctes 25, connectées par une prise de vide 26 à un caisson sous vide 27.

Les bandes 21 et 22 sont disposées légèrement en avant par rapport au fond du canal 23 et par rapport aux barrettes 24. Par exemple les barrettes 24 seront en retrait d'environ 0,3 mm par rapport à la surface des bandes sans fin 21, 22 tandis que le fond du canal 23 sera en retrait d'environ 2 mm par rapport à la surface des mêmes bandes sans fin. Les chambres à vide 25a disposées aux extrémités ou à proximité des extrémités de ce système de transport 20, ont des dimensions plus faibles que les chambres 25 de la partie médiane, afin d'exercer un excellent effort de maintien sur les feuilles de verre lors de leur prise en charge par le système ou lors de leur déchargement, même si un nombre réduit de chambres 25 sont recouvertes par les feuilles de verre. Toujours pour renforcer le maintien des feuilles de verre 100 lorsqu'elles abordent ou quittent le système 20, plusieurs orifices de vide 26 pourront être prévus dans les chambres 25 d'extrémité ou proches des extrémités.

Eventuellement le système 20 peut être en plusieurs tronçons séparés, les bandes de chaque tronçon défilant à la même vitesse, et avantageusement, les chambres 25a des extrémités de chaque tronçon étant prévues pour que la dépression y soit plus importante que dans les chambres médianes, c'est à dire qu'elles peuvent être de dimensions plus restreintes par exemple elles n'auront que 5 à 10 cm de large au lieu des 20 à 25 cm en zone médiane c'est à dire également qu'elles peuvent posséder plusieurs prises de vide 26. L'espace entre deux tronçons du système à dépression peut en particulier permettre le logement de la rangée verticale de galets 6. Ce système de transport est avançable ou reculable par rapport au plan du tableau 4 à l'aide de biellettes non représentées sur les figures.

La structure de l'ensemble 1 de transport porte également quatre détecteurs 30, 31, 32 et 33 de présence de feuilles de verre 100, détecteurs du type cellules photoélectriques. Les détecteurs 30 et 31 sont placés en amont de la rangée verticale de galets 6, tandis que les détecteurs 32 et 33 sont placés en aval, respectivement symétriques des détecteurs 31 et 30 par rapport à ladite rangée de galets 6.

Ces détecteurs 30, 31, 32, 33 émettent des signaux qui déclenchent des variations de vitesse du convoyeur 2 et du système de transport à dépression 20 et qui agissent sur l'extrusion.

La structure de l'ensemble 1 de transport porte également un moyen de mesure 34 de l'épaisseur des feuilles de verre 100, en amont de la rangée verticale de galets 6, par exemple à 5 cm et également en amont du détecteur 30. Ce moyen de mesure comprend une plaquette 35 amenée au contact de la surface des feuilles de verre 100 à l'aide d'un vérin 36, un potentiomètre 37 qui est entraîné lors de l'avancée de la plaquette 35. Ce moyen de mesure permet de positionner l'ensemble d'extrusion 50 par rapport aux feuilles de verre, en fonction de leur épaisseur.

Avantageusement le tableau 4 est incliné d'un angle faible par rapport à la verticale, environ 6° assurant l'équilibre des feuilles de verre 100.

L'ensemble 50 de préparation de la matière plastique et d'extrusion du cordon 101 calibré de ladite matière plastique comprend essentiellement une tête d'extrusion 51. Cette tête d'extrusion possède une buse 52 avec une sortie inclinée par rapport au plan du tableau 4 d'un angle de 15 à 45° et de préférence de 25 à 35° comme décrit dans le brevet français 2 294 313 déjà cité. Cette buse 52 est équipée d'un tiroir non représenté, à position réglable, autorisant la modification de sa section en vue d'extruder des cordons 101 de différentes hauteurs, ainsi que d'un coupe-cordon également non représenté, constitué par une lame actionnée par un vérin, destiné à couper le cordon 101 en fin d'extrusion. Cette buse 52 est montée pivotante sur une couronne 53 tournant suivant un axe perpendiculaire au plan du tableau 4. Un poinçon 54 permet de bloquer ladite couronne 53 dans la position désirée en s'engageant dans des encoches non représentées prévues à cet effet à la périphérie de la couronne 53.

Les figures 1, 2 et 3 montrent également les moyens fournissant la matière plastique à la tête d'extrusion 51 et disposés en amont de ladite tête 51.

Dans la réalisation prise en exemple, ces moyens sont constitués par un réservoir 60 de la matière plastique brute, c'est à dire telle que livrée et ayant donc une viscosité et une dureté élevées, trop élevées pour pouvoir être extrudée d'une part et pour coller sur le verre d'autre part. Ce réservoir 60 est fixe.

Un piston 61 conique, chauffé, muni d'appendices chauffants 62 en forme de bougies qui plongent dans la matière plastique, est appliqué avec pression contre la matière plastique contenue dans le réservoir 60. Une pompe 63 rotative à engrenages internes est disposée à la sortie de ce piston 61 et fournit à sa sortie une matière plastique sous pression. Sur cette pompe 63 sont branchées des conduites rigides coudées telles que 64 jointes par des raccords tournants tels que 65 résistants à des températures élevées et à des pressions élevées de l'ordre de 300 ou 400 bars.

Ces conduites sont branchées sur un magasin à volume variable 66 constituant une réserve de matière plastique et régularisant la pression de la matière plastique à sa sortie. Ce magasin 66 est alimenté en continu par tous les éléments disposés en amont et au contraire à sa sortie, il délivre la matière plastique à la demande.

La sortie de ce magasin 66 communique avec une pompe volumétrique 67 entraînée par un moteur électrique non représenté, à courant continu, piloté par cartes de consignes par l'intermédiaire d'un variateur. La sortie de cette pompe 67 est branchée directement sur la tête d'extrusion 51. L'ensemble magasin à volume variable 66, pompe volumétrique 67, tête d'extrusion 51 est monté sur un chariot 68 porté par une platine 69 mobile selon une direction différente de la direction de déplacement fournie par le convoyeur 2 à rouleaux 3, et avantageusement selon une direction orthogonale. Cette platine 69 est apte à se déplacer le long de deux glissières 70, 71, parallèles au tableau 4 et donc au plan des feuilles de verre 100. Le mouvement le long de ces deux glissières 70, 71 est provoqué par un moteur 72 qui entraîne en rotation une vis sans fin 73, parallèle aux glissières 70, 71, cette vis sans fin 73 étant engagée dans des douilles à billes non figurées, solidaires de la platine 69. Les glissières 70, 71 ainsi que la vis sans fin 73 sont fixées le long d'un pupitre vertical 74. Le moteur 72 est un moteur électrique à courant continu piloté par cartes de consignes.

Le chariot 68 est mobile par rapport à la platine 69 suivant une direction orthogonale au plan du tableau 4 sous l'action d'une part d'une vis sans fin non représentée, actionnée par un moteur électrique également non représenté, d'autre part d'un vérin non représenté. Le moteur électrique est associé à un potentiomètre non représenté couplé au potentiomètre 37. Ce moteur électrique permet d'ajuster la distance verre-buse en fonction de l'épaisseur des feuilles de verre 100, tandis que le vérin permet d'éloigner ou au contraire rapprocher la buse 52 du tableau, de distances prédéterminées, notamment pour mettre la buse en service ou hors service.

La tête d'extrusion 51 porte également deux détecteurs de présence du verre 75 et 76, ces deux détecteurs agissant sur les mouvements de la platine 69 le long de ses glissières 70, 71. Ces deux détecteurs 75 et 76 sont disposés au-dessus de la tête d'extrusion 51, l'un 75 détecte le bord supérieur de la feuille de verre alors que la tête 51 dans son mouvement ascendant n'est encore qu'à quelques millimètres de ce bord supérieur, l'autre 76 détecte ce même bord supérieur lorsque la tête 51 a atteint son niveau maximum dans son mouvement ascendant.

Deux micro-contacteurs 77 et 78 sont également prévus sur le pupitre 74 le long de la vis sans fin 73, l'un 77 destiné à être intercepté lorsqu'au cours de son mouvement de translation le long des glissières 70 et 71, la tête d'extrusion 51 portée par la platine 69 arrive à distance déterminée, de l'ordre de quelques millimètres de sa position basse extrême, l'autre 78 destiné à être intercepté lorsque la tête d'extrusion atteint cette position basse extrême correspondant à la position du cordon déposé sur la portion basse de la feuille de verre.

Immédiatement avant la sortie de buse 52, est également disposé un système de décompression apte à créer une dépression dans le circuit de fourniture de la matière plastique à certains instants. Un tel système est décrit dans le brevet français 2 207 799.

Un moyen de soutien du cordon 101 lorsqu'il est déposé le long de lignes horizontales ou obliques, donc lorsqu'il peut avoir tendance à s'affaisser peut être prévu. Il peut notamment s'agir d'un jeu de roulettes, en particulier deux roulettes, non représentées sur les figures. Avantageusement ces roulettes sont attachées à la tête d'extrusion 51. Elles peuvent être disposées de telle façon que lorsque la tête 51 est pivotée et dépose du cordon le long d'un trajet non vertical, elles viennent se positionner sous ledit cordon qui vient d'être extrudé et qui vient d'être collé sur la feuille de verre.

Avantageusement elles ont une forme d'hyperboloïde de révolution.

L'ensemble fournissant la matière plastique à la tête d'extrusion 51 n'est donné qu'à titre d'exemple, d'autres ensembles aptes à alimenter une tête d'extrusion 51 mobile en translation pourraient être conçus. On pourrait notamment disposer d'une boudineuse, à vis sans fin, ladite boudineuse étant susceptible de se déplacer en translation suivant une direction différente de celle définie par le convoyeur 2 et avantageusement orthogonale à cette direction définie par le convoyeur.

Un système logique de commande incluant les cartes de consignes, les différents détecteurs et contacteurs et comportant tout un ensemble électronique apte à traiter les données et signaux fournis par ces cartes et détecteurs est également prévu.

Les cartes de consignes peuvent prévoir que s'effectuent des translations soit des feuilles de verre 100 par entraînement grâce au convoyeur 2 selon une direction notamment horizontale, soit de la tête d'extrusion 51 selon une direction notamment orthogonale à celle définie par le convoyeur 2 par rotation de la vis sans fin 73, ou alors des translations simultanées des feuilles de verre 100 et de la tête d'extrusion 51.

Dans le premier cas, on peut déposer des cordons le long de feuilles de verre rectangulaires, dans le second cas, suivant la composition des vitesses des deux translations, on peut déposer des cordons sur des feuilles de verre de n'importe quelle forme.

Par construction, la rangée de galets 6 est disposée exactement face à la buse 52.

L'installation décrite ci-dessus fonctionne de la manière suivante :

Au démarrage, la tête d'extrusion 51 est dans sa position basse extrême et la buse 52 est orientée par rotation de sa couronne 53 de façon à former l'angle aigu requis avec la partie du tableau 4 située au-dessus d'elle.

Une feuille de verre 100 destinée à recevoir le cordon 101 sur sa périphérie arrive sur le convoyeur 2, en position verticale, dans le sens de la flèche F montrée sur les figures, à vitesse élevée, par exemple de l'ordre de 50 m/min. A l'approche de l'ensemble 50 d'extrusion, elle est également prise en charge par le système 20 de transport à dépression à bandes 21 et 22 en matériau antiglisse défilant à la même vitesse que le convoyeur 2. Grâce à la dépression exercée dans chacune des chambres 25 de ce système, et grâce aux propriétés antiglisse du matériau des bandes 21 et 22, le mouvement des feuilles de verre 100 est très précis, bien que lesdites feuilles de verre ne reposent sur les rouleaux 3 du convoyeur que par leur tranche. Avant d'arriver dans la zone de pose du cordon 101, la feuille de verre 100 est arrêtée à l'aide de détecteurs de présence classiques non évoqués jusqu'ici et non représentés, et son épaisseur est mesurée. Ceci se passe par exemple à 5 cm avant la rangée de galets 6. La plaquette 35 est amenée au contact de la surface du verre par son vérin 36, le potentiomètre 37 est alors entraîné et il délivre une tension qui est entrée dans une mémoire. Cette tension sert ensuite à guider le positionnement correct de la tête d'extrusion 51. Celle-ci est déplacée en direction du tableau 4 par le moteur électrique qui agit sur le chariot 68. Le potentiomètre 37 est actionné, il délivre une tension et ledit moteur électrique agit tant que cette tension délivrée n'égale pas celle mise en mémoire et délivrée par le moyen de mesure.

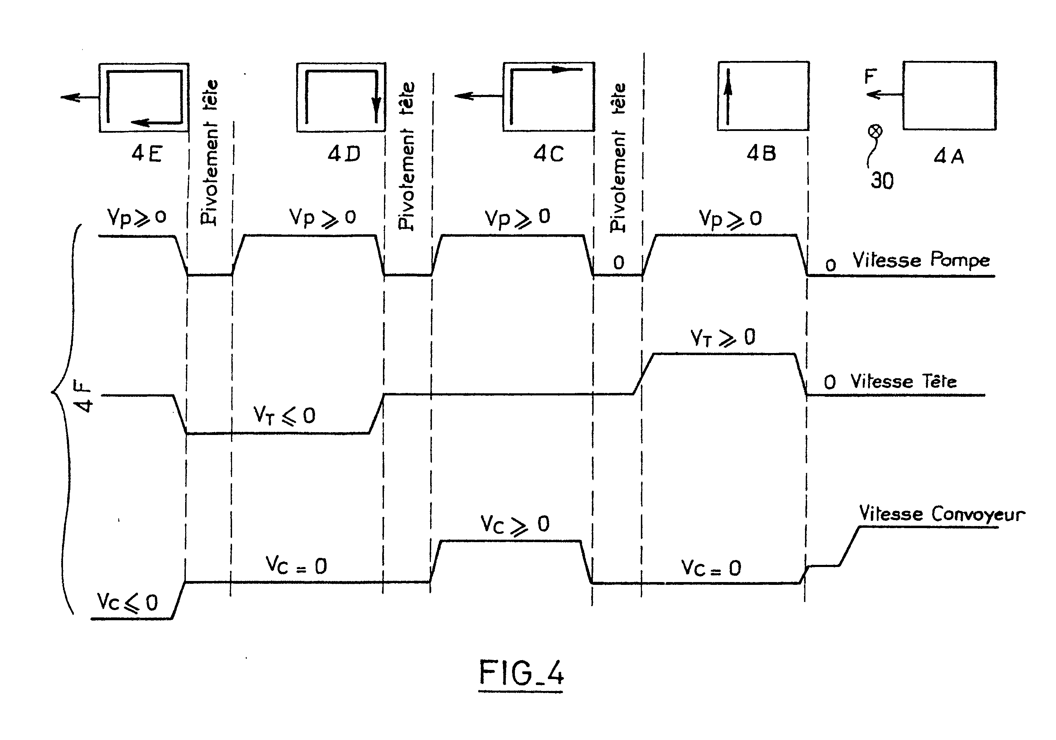

La feuille de verre ayant repris son défilement, rencontre ensuite le détecteur 30 comme montré figure 4A. Celui-ci émet un signal qui commande après retard réglable, le ralentissement du convoyeur 2 et du système 20, jusqu'à une vitesse lente de l'ordre de 3 m/min. La feuille de verre 100 rencontre ensuite par son bord avant le détecteur 32. Celui-ci déclenche alors l'arrêt immédiat du convoyeur 2 et du système 20. Il déclenche aussi avec un certain retard réglable le fonctionnement de la pompe volumétrique 67 à une vitesse prédéterminée, donc l'extrusion du cordon 101, puis avec un certain retard par rapport au démarrage de la pompe, retard également réglable, le fonctionnement du moteur 72 à vitesse prédéterminée, dans un sens tel que la platine 69 et donc la tête d'extrusion 51 s'élève le long des glissières 70 et 71. Du cordon est ainsi déposé le long du bord vertical de la feuille de verre 100 comme montré figure 4B. Ceci se continue jusqu'à ce que le détecteur 75 rencontre le bord horizontal supérieur de la feuille de verre 100. Il commande alors avec des retards réglables, le ralentissement du moteur 72 et en synchronisme celui de la pompe volumétrique 67, la mise en action du système de décompression, le retrait de la buse 52 vis à vis de la feuille de verre 100 par mouvement de recul du chariot 68 sous l'action de son vérin et le pivotement de la tête d'extrusion. Ensuite, le détecteur 76 rencontre le bord de la feuille de verre et il commande l'arrêt immédiat du moteur 72 et de la pompe 67.

Le retard prévu pour le pivotement de la tête d'extrusion est alors terminé et la couronne 53 est tournée plaçant ainsi la buse 52 dans la bonne position en vue de l'extrusion suivant un autre côté de la feuille de verre, puis le chariot est rapproché du verre et donc aussi la buse 5 et enfin le système de décompression est relaché, la pompe volumétrique 67 redémarre et le convoyeur 2 est remis en route faisant ainsi défiler la feuille de verre 100 dans le sens de la flèche F ( figure 4C ).

La pose du cordon se continue à vitesse constante sur le côté supérieur horizontal de la feuille de verre jusqu'à ce que le bord arrière de ladite feuille rencontre le détecteur 30. Celui-ci déclenche avec des retards réglables, le ralentissement du défilement du verre et corrélativement le ralentissement de la pompe 67, le recul de la buse 52, la décompression et le pivotement de la tête d'extrusion.

Le bord de la feuille de verre rencontre alors le détecteur 31, ce qui commande l'arrêt du convoyeur 2 et de la pompe 67.

Le pivotement de la tête d'extrusion s'effectue et le dispositif est alors prêt à déposer le cordon 101. La pose du cordon 101 s'effectue sur le côté vertical de la feuille de verre, la tête d'extrusion 51 étant entraînée en translation verticale descendante, par mouvement de la platine 69 le long de ses glissières ( figure 4D ).

L'interception du micro-contacteur 77 déclenche avec des retards réglables les ralentissements du mouvement de translation, de la rotation de la pompe, déclenche également avec des retards réglables le pivotement de la tête d'extrusion, la mise en action du système de décompression et le recul de la buse. A l'interception du micro-contacteur 78, le mouvement de translation s'arrête et la pompe 67 cesse de tourner. Les temps de retard prévus s'étant écoulés la tête d'extrusion pivote. Ensuite comme déjà décrit en relation avec la pose du cordon sur le côté horizontal supérieur, les différentes opérations de redémarrage de la pose du cordon s'enclenchent, et cette fois ci pour déposer ledit cordon le long du côté horizontal inférieur de la feuille de verre, celle-ci se déplaçant dans le sens opposé à la flèche F, et la tête d'extrusion restant fixe. ( figure 4E ). C'est à l'interception du détecteur 33 que les différents ralentissements et préparations à l'arrêt sont commandés. La rencontre du bord avant de la feuille de verre avec le détecteur 32 commande l'arrêt du convoyeur 2. Après la fin de la pose du cordon, celui-ci est coupé par le coupe-cordon et pour garantir la séparation, le convoyeur engage un mouvement court dans le sens opposé à la flèche F.

Ensuite la feuille de verre est évacuée dans le sens de la flèche F.

Comme on peut le voir sur les diagrammes de vitesse de la figure 4F établis sous les vues 4A, 4B, 4C, 4D et 4E et correspondants aux différentes phases illustrées par ces vues, à l'arrivée de la feuille de verre ( figure 4A ) avant la pose du cordon, la vitesse de rotation de la pompe 67 est nulle ( $V_p = 0$ ), la vitesse de déplacement de la tête d'extrusion 51 par mouvement le long des glissières verticales 70, 71 est également nulle ( $V_t = 0$ ), seule la vitesse du convoyeur est positive ( $V_c$ = positive ).

Pour réaliser la pose du cordon le long du bord vertical avant de la feuille de verre, les cartes de consignes commandent la montée en vitesse du moteur de la pompe 67 ( $V_p$ ) du moteur 72 ( $V_t$ ) et le niveau de ces vitesses après démarrage ( $V_p$ = constante, $V_t$ = constante positive ).

A la fin de la pose du cordon le long de ce côté vertical, les cartes de consignes commandent également la décroissance de ces vitesses $V_p$ et $V_t$ jusqu'à une valeur nulle $V_p = 0$ et $V_t = 0$. Pendant le pivotement de la tête d'extrusion toutes les vitesses sont nulles. Ensuite pour la pose du cordon le long du bord horizontal supérieur de la feuille de verre, les cartes de consignes commandent l'accélération de la rotation du moteur de la pompe et du convoyeur 2 jusqu'à :

$V_p$ = constante et $V_c$ = constante positive
Pendant ce temps $V_t = 0$

Ces diagrammes de vitesses se placent sous la vue 4C. Ensuite sous la vue 4D correspondant à la pose du cordon le long du côté vertical arrière dans le sens descendant on peut lire que :

$V_c = 0$  $V_t$ = constante négative et $V_p$ = constante

Ensuite comme précédemment, pendant le pivotement de la buse

$V_c = 0$  $V_p = 0$  $V_t = 0$

Ensuite pendant la pose du cordon le long du côté horizontal inférieur de la feuille de verre ( vue 4E ) on peut lire :

$V_p$ = constante  $V_t = 0$  $V_c$ = constante négative

Ceci représente un exemple de pose d'un cordon le long des bords d'une feuille de verre rectangulaire. Dans le cas d'une feuille d'une forme quelconque, par exemple avec des côtés obliques, nous aurions dû déplacer simultanément la feuille de verre et la tête d'extrusion, et nous aurions donc eu simultanément :

$V_t$ et $V_c$ différents de zéro

Ainsi grâce au pilotage simultané du moteur 72 qui commande la translation de la tête suivant la direction verticale ou sensiblement verticale, du moteur de convoyeur 2, du moteur de la pompe volumétrique 67, par cartes de consignes ou éventuellement par un autre moyen équivalent, les accélérations et décélérations, les vitesses stabilisées de ces moteurs sont déterminées avec précision.

Ainsi la constance de dimensions du cordon 101 peut être obtenue.

De grands vitrages peuvent être fabriqués, avec des manipulations réduites qui se limitent à des translations desdits vitrages.

La réduction des manipulations limite l'encombrement d'une part et autorise d'autre part d'excellentes qualités des vitrages fabriqués.

Les déplacements de la tête d'extrusion sont eux aussi limités à des translations ce qui permet des longueurs relativement faibles du circuit de distribution de la matière plastique. Grâce aux moyens de préparation de la matière plastique prévus, des débits élevés à la sortie de la buse 52 sont possibles, même avec une matière plastique du type mélange caoutchouc butyl/polyisobutylène, mélange dont la viscosité, la dureté, et en général les difficultés d'extrusion sont bien connues des hommes de métier.

L'installation selon l'invention dans laquelle les feuilles de verre et la buse sont animées de mouvements relatifs croisés est particulièrement efficace dans le cas où les feuilles de verre sont disposées verticalement ou sensiblement verticalement, en raison du faible encombrement et du nombre réduit de manipulations.

Cependant de tels mouvements croisés peuvent aussi être intéressants dans le cas où les feuilles de verre ont une autre disposition, par exemple dans le cas où elles sont à plat.

**Revendications**

1. Installation pour extruder et déposer à la périphérie d'une feuille de verre (100) un cordon calibré (101) extrudé à partir d'une matière plastique à base de caoutchouc butyl dont la viscosité est supérieure à 115° Mooney au bout de huit minutes et à 40° C, à l'aide d'un ensemble d'extrusion (50), **caractérisée par :**

   - un tableau (4) vertical ou sensiblement vertical sur lequel est adossée la feuille de verre (100) déplacée par un convoyeur (2) la faisant défiler dans les deux sens devant l'ensemble d'extrusion,
   - un réservoir fixe (60) et une pompe (63) pour extraire la matière plastique contenue dans le réservoir (60),
   - une platine (69) mobile le long de glissières (70, 71) verticales ou sensiblement verticales, portant un magasin à volume variable (66) - constituant une réserve de matière plastique et régularisant la pression de la matière à sa sortie - une pompe (67) et une tête d'extrusion,
   - des conduites branchées entre la pompe (63) et le magasin à volume variable (66),
   - des moyens pour faire pivoter la tête d'extrusion autour d'un axe perpendiculaire au plan du tableau (4)afin de maintenir constant l'angle entre la tête d'extrusion et ledit plan.

2. Installation selon la revendication 1, **caractérisée en ce que** ladite platine (69) est déplacée sous l'action d'une vis sans fin (73) mue par un moteur (72) et engagée dans des douilles à billes fixées sur la platine.

3. Installation selon la revendication 1 ou 2, **caractérisée en ce que** le tableau est légèrement incliné par rapport à la verticale par exemple d'un angle de l'ordre de 6°.

4. Installation selon l'une des revendications 1 à 3, **caractrisée en ce que** le tableau (4) est percé d'orifices (5) de soufflage d'un gaz de façon à réaliser un coussin gazeux entre la feuille de verre (100).

5. Installation selon la revendication 4, **caractérisée en ce qu'**au moins les orifices (5) à hauteur d'homme sont dirigés obliquement.

6. Installation selon l'une des revendications 4 ou 5, **caractérisée par** une rangée de galets débordant du tableau d'une distance égale à l'épaisseur du coussin gazeux, encastrée dans le tableau (4) et en regard de la buse d'extrusion (52) sur toute la hauteur des glissières (70, 71).

7. Installation selon l'une des revendications 1 à 6, **caractérisée par** un système de transport à dépression (20) comportant deux bandes sans fin (21, 22) en matériau anti-glisse du type caoutchouc, débordant du tableau (4) de façon à être en contact avec la feuille de verre (100), entraînées à la même vitesse et dans le même sens que le convoyeur (2) et délimitant un canal (23) divisé en une pluralité de chambres à vide (25) par des barettes (24) et mis en dépression par des orifices d'aspiration (26) - connectés à un dispositif de mise sous vide - débouchant dans lesdites chambres à vide (25).

8. Installation selon l'une des revendications 1 à 7, **caractérisée en ce que** la pompe (67) est une pompe volumétrique mue par un moteur électrique.

9. Installation selon l'une des revendications 1 à 8, caractérisée par un chariot (68) pour rapprocher ou éloigner la buse (52) de la feuille de verre (100).

10. Installation selon l'une des revendications 1 à 9, **caractérisée en ce que** les conduites sont formées par une série de conduites (64) coudées jointes par des raccords tournants (65).

11. Installation selon la revendication 7, **caractérisée en ce qu'**elle comporte un moyen de maintien du type roulettes solidaires de la buse (52), apte à se placer sous la matière plastique qui vient d'être extrudée et qui est déposée sur une feuille de verre (100) selon une direction non verticale.

12. Installation selon la revendication 11, **caractérisée en ce que** la roulette solidaire de la buse (52) possède un bord concave en forme approximativement d'hyperbole.

13. Installation selon l'une des revendications précédentes, **caractérisée en ce que** des séries de détecteurs (75, 76) et/ou microcontacteurs (77, 78) sont prévus le long du convoyeur (2) et le long de la direction de déplacement de la buse (52) en vue de piloter les mouvements respectivement des feuilles de verre (100) le long du convoyeur (2) et de la buse (52) le long de sa direction de déplacement.

## Claims

1. Installation for extruding and depositing on the periphery of a glass sheet (100), a calibrated ribbon (101) extruded from a butyl rubber-based plastics material, whose viscosity exceeds 115° Mooney at the end of eight minutes and 40°C, with the aid of an extrusion unit (50), characterized by a vertical or substantially vertical table (4) on which is back-supported the glass sheet (100) displaced by a conveyor (2) making it travel in both directions in front of the extrusion unit, a fixed tank (60) and a pump (63) for extracting the plastics material contained in the tank (60), a support plate (69) moving along vertical or substantially vertical slides (70, 71), carrying a variable volume magazine (66), which forms a plastics material reserve and regularizes the pressure of the material at its outlet, a pump (67) and an extrusion head, pipes connected between the pump (63) and the variable volume magazine (66), as well as means for pivoting the extrusion head around an axis perpendicular to the plane of the table (4), so as to keep constant the angle between the extrusion head and the said plane.

2. Installation according to claim 1, characterized in that said support plate (69) is displaced under the action of an endless screw (73) displaced by a motor (72) and engaged in ball bushes fixed to the support plate.

3. Installation according to claims 1 or 2, characterized in that the table is slightly inclined relative to the vertical, e.g. by an angle of approximately 6°.

4. Installation according to any one of the claims 1 to 3, characterized in that the table (4) has orifices (5) for blowing a gas, so as to form a gas cushion between the glass sheet (100.

5. Installation according to claim 4, characterized in that at least the man height orifices (5) are directed obliquely.

6. Installation according to either of the claims 4 and 5, characterized by a row of rollers projecting over the table by a distance equal to the thickness of the gas cushion, embedded in the table (4) and facing the extrusion nozzle (52) over the entire height of the slides (70, 71).

7. Installation according to any one of the claims 1 to 6, characterized by a negative pressure conveying system (20) having two endless belts (21, 22) made from a slip-preventing material of the rubber type, projecting over the table (4) so as to be in contact with the glass sheet (100), driven at the same speed and in the same direction as the conveyor (2) and defining a channel (23) subdivided into a plurality of vacuum chambers (25) by bars (24) and placed under negative pressure by suction orifices (26), which are connected to a vacuumizing device, issuing into the said vacuum chambers.

8. Installation according to any one of the claims 1 to 7, characterized in that the pump (67) is a volumetric pump operated by an electric motor.

9. Installation according to any one of the claims 1 to 8, characterized by a carriage (68) for moving the nozzle (52) towards or away from the glass sheet (100).

10. Installation according to any one of the claims 1 to 9, characterized in that the pipes are formed by a series of bent pipes (64) joined by rotary connectors (65).

11. Installation according to claim 7, characterized in that it incorporates a maintaining means of the type having runners integral with the nozzle (52), which can be placed beneath the plastics material which has just been extruded and which is deposited on a glass sheet (100) in a non-vertical direction.

12. Installation according to claim 11, characterized in that the runner integral with the nozzle (52) has an approximately hyperbolic concave edge.

13. Installation according to any one of the preceding claims, characterized in that series of detectors (75, 76) and/or microcontactors (77, 78) are provided along the conveyor (2) and along the displacement direction of the nozzle (52) for controlling the movements respectively of the glass sheets (100) along the conveyor (2) and the nozzle (52) along its displacement direction.

## Patentansprüche

1. Anlage zum Strangpressen und Aufbringen eines kalibrierten Strangs (101) auf den Umfang einer Glasscheibe (100), wobei der Strang mit Hilfe einer Extrudiereinrichtung (50) aus einem Kunststoff auf der Basis von Butylkautschuk extrudiert ist, dessen Viskosität nach 8 Minuten und bei 40° C über 115° Mooney liegt, **gekennzeichnet durch:**
   - eine senkrechte oder im wesentlichen senkrechte Tafel (4), an die die Glasscheibe (100) angelehnt ist, die durch eine Fördereinrichtung (2), die sie in beiden Richtungen vor der Extrudiereinrichtung vorbeilaufen läßt, verschiebbar ist,
   - einen festen Speicher (60) und eine Pumpe (63) zum Entnehmen des im Speicher (60) enthaltenen Kunststoffs,
   - eine entlang von senkrechten oder im wesentlichen senkrechten Gleitführungen (70,71) bewegliche Platine (69), die ein Magazin mit variablem Volumen (66), das einen Vorrat an Kunststoff bildet und den Druck des Kunststoffes bei seinem Ausgang reguliert, eine Pumpe (67) und einen Extrudierkopf trägt,
   - Leitungen zwischen der Pumpe (63) und dem Magazin mit variablem Volumen (66),
   - eine Einrichtung zum Schwenken des Extrudierkopfes um eine senkrecht zur Ebene der Tafel (4) stehende Achse, um den Winkel zwischen dem Extrudierkopf und dieser Ebene konstant zu halten.

2. Anlage nach Anspruch 1, **dadurch gekennzeichnet, daß** die Platine (69) unter der Einwirkung einer von einem Motor (72) betriebenen Schnecke (73) verschoben wird, die mit Kugelbuchsen auf der Platine zusammenwirkt.

3. Anlage nach Anspruch 1 oder 2, **dadurch gekennzeichnet, daß** die Tafel gegenüber der Vertikalen leicht geneigt ist, zum Beispiel unter einem Winkel von etwa 6°.

4. Anlage nach einem der Ansprüche 1 bis 3, **dadurch gekennzeichnet, daß** die Tafel (4) mit Gasblasöffnungen versehen ist, so daß zwischen der Glasscheibe (100) ein Gaskissen erzeugt wird.

5. Anlage nach Anspruch 4, **dadurch gekennzeichnet, daß** zumindest die Öffnungen (5) in Brusthöhe schräg gerichtet sind.

6. Anlage nach einem der Ansprüche 4 oder 5, **gekennzeichnet durch** eine Reihe von Rollen, die aus der Tafel um eine Länge vorstehen, die gleich der Dicke des Gaskissens ist, wobei diese Reihe von Rollen in die Tafel (4) und auf der ganzen Höhe der Führungen (70,71) gegenüber der Extrudierdüse (52) eingelassen ist.

7. Anlage nach einem der Ansprüche 1 bis 6, **gekennzeichnet durch** ein Unterdrucktransportsystem (20), das zwei Endlosbänder (21,22) aus rutschfreiem kautschukartigem Material enthält, die über die Tafel (4) vorstehen, dergestalt, daß sie die Glasscheibe (100) berühren, und in der gleichen Geschwindigkeit und in der gleichen Richtung wie die Fördereinrichtung (2) angetrieben werden und einen Kanal (23) abgrenzen, der durch Stege (24) in eine Anzahl von Vakuumkammern (25) aufgeteilt ist, und der in Unterdruck versetzt wird über Ansaugöffnungen (26), die mit einer Vorrichtung zum Erzeugen eines Vakuums verbunden sind und in die Vakuumkammern (25) einmünden.

8. Anlage nach einem der Ansprüche 1 bis 7, **dadurch gekennzeichnet, daß** die Pumpe (67) eine volumetrische, von einem Elektromotor angetriebene Pumpe ist.

9. Anlage nach einem der Ansprüche 1 bis 8, **gekennzeichnet durch** einen Schlitten (68), der dazu dient, die Düse (52) an die Glasscheibe (100) anzunähern oder sie von dieser zu entfernen.

10. Anlage nach einem der Ansprüche 1 bis 9, **dadurch gekennzeichnet, daß** die Leitungen aus einer Reihe von bogenförmigen Leitungen (64) gebildet werden, die durch Drehverbindungen (65) verbunden sind.

11. Anlage nach Anspruch 7, **dadurch gekennzeichnet, daß** sie eine Halteeinrichtung beinhaltet in der Art von mit der Düse (52) verbundenen Rädern, die unter den Kunststoff fahren, der gerade stranggepreßt worden ist und der auf einer Glasscheibe (100) in nicht senkrechter Richtung abgelegt wird.

12. Anlage nach Anspruch 11, **dadurch gekennzeichnet, daß** das mit der Düse (52) verbundene Rädchen einen etwa in Form einer Hyperbel konkaven Rand besitzt.

13. Anlage nach einem der vorhergehenden Ansprüche, **dadurch gekennzeichnet, daß** Reihen von Detektoren (75,76) und/oder Mikrokontakten (77,78) über die Länge der Fördereinrichtung (2) und über die Länge der Verschiebungsrichtung der Düse (52) vorgesehen sind, um die Bewegungen der Glasscheiben (100) entlang der Fördereinrichtung (2) und die der Düse (52) über die Länge ihrer Verschiebungsrichtung zu steuern.

FIG_1

FIG. 2

EP 0 176 388 B1

FIG_3

14

FIG_4

EP 0 176 388 B1